# EUROPÄISCHE PATENTSCHRIFT

(11) **EP 3 124 207 B1**
(45) Veröffentlichungstag und Bekanntmachung des Hinweises auf die Patenterteilung: **16.05.2018**
(21) Anmeldenummer: 16158855.3
(22) Anmeldetag: 07.03.2016
(51) Int. Cl.: B29C 65/00, B29D 29/08, B29D 29/10

(54) **VERFAHREN UND ANLAGE ZUM AUTOMATISCHEN HERSTELLEN EINES SCHLAUCHS**
METHOD AND APPARATUS FOR AUTOMATICALLY MANUFACTURING A SLEEVE
PROCEDE ET INSTALLATION DESTINES A FABRIQUER AUTOMATIQUEMENT UN TUYAU

(30) Priorität: 27.07.2015 DE 102015214103
(43) Veröffentlichungstag der Anmeldung: 01.02.2017
(73) Patentinhaber: ContiTech Antriebssysteme GmbH, 30165 Hannover (DE)
(72) Erfinder: Greydanus, Ymte, 30890 Barsinghausen (DE); Schiffer, Friedemann, 30974 Wennigsen (DE); Tusche, Marcel, 30823 Garbsen (DE)
(74) Vertreter: Kilsch, Armin Ralph

(56) Entgegenhaltungen:
- WO-A1-2008/147442
- GB-A- 1 430 319
- US-A- 4 878 985

## Beschreibung

Die Erfindung betrifft ein Verfahren zum automatischen Herstellen eines Schlauchs, insbesondere eines Schlauchs zum Herstellen von Zahnriemen oder Keilrippenriemen.

Die DE 2 123 902 A1 beschreibt ein Verfahren zur Herstellung eines endlosen, armierten Zahnriemens aus Kunststoff mit in Riemenlängsrichtung verlaufenden, eingebetteten draht- oder fadenförmigen Kraftträgern. Bei diesem Verfahren wird zwischen einem drehbaren, auf seinem Umfang eine dem Riemenquerschnitt entsprechende ringförmige Vertiefung aufweisenden Formrad und einer die Vertiefung auf einen Teil des Formradumfangs verschließenden Abdeckung ein Formhohlraum gebildet wird, in dessen durch eine Extruderdüse verschließbaren Anfang ein plastifizierter Kunststoff eingeführt wird. Mit dem Verfahren und der genannten Vorrichtung, die ein drehbares Formrad und als Abdeckung ein mit dem Formrad sich fortbewegendes, endloses Formband verwenden, ist ein armierter Zahnriemen herstellbar, der jedoch axiale Enden aufweist und für die Anwendung als umlaufendes Antriebselement zwischen Zahnrädern endlos gemacht werden muss, wodurch der Zahnriemen aber an der Umfangsstelle der Endlosverbindung eine Unterbrechung seiner eingebetteten Kraftträger aufweist.

Mit den aus der DE 2 526 691 C3 bekannten Verfahren und Vorrichtung, die zusätzlich zum Formrad und zum Formband ein von dem Formrad entferntes, achsparalleles Spannrad verwenden, ist ein endloser, armierter Zahnriemen herstellbar, dessen gewünschte Riemenumfangslänge durch Veränderung des Achsabstandes zwischen Formrad und Spannrad variiert werden kann. Die herstellbare, vom Durchmesser des Formrades und des Spannrades abhängige Mindestumfangslänge ist aber durch den kleinstmöglichen Achsabstand begrenzt, bis auf den das Spannrad an das Formrad angenähert werden kann. Unterhalb dieser Mindestumfangslänge können zwar endlose, armierte Zahnriemen mit so genannter werkzeuggebundener Riemenumfangslänge in einem beispielsweise aus der DE 2 653 741 A1 bekannten, aus einem Formkern und einer Formhülse bestehenden Formwerkzeug hergestellt werden. Für jede herzustellende Riemengröße ist aber ein gesondertes, kostspieliges, komplett aus Formkern und Formhülse anzufertigendes Formwerkzeug erforderlich.

Um diese Nachteile zu vermeiden, wird gemäß einem internen Stand der Technik der Anmelderin durch eine Bedienungsperson von Hand ein noch nicht vulkanisierter Elastomermischungsschlauch aus einer Elastomermischungsplatte gefertigt. Dabei werden zwei gegenüberliegende Ränder der Elastomermischungsplatte, deren Abstand dem Umfang des herzustellenden Zahnriemens oder Keilrippenriemens entspricht, unter einem Winkel angeschnitten, dann diese Ränder Stoß an Stoß aneinandergelegt, und danach unter einer Presse im Stoßbereich fest verklebt. Der Winkel beträgt beispielsweise 30°. Es ist ersichtlich, dass sich auf diese Weise Elastomermischungsschläuche fertigen lassen, deren Umfang jedem gewünschten Umfang von Zahnriemen oder Keilrippenriemen entsprechen kann.

Ein solcher Elastomermischungsschlauch lässt sich anschließend in bekannter Weise mit in Riemenlängsrichtung verlaufenden, draht- oder fadenförmigen Kraftträgern und einer Profilierung entsprechend einem Zahnriemen oder einem Keilrippenriemen versehen. Das beschriebene Fertigen des Elastomermischungsschlauchs erfordert sehr viel Handarbeit. Auch eine gut eingearbeitete Bedienungsperson benötigt dafür vergleichsweise viel Zeit, und gelegentlich ist eine ungünstige Ausschussrate festzustellen.

Vor diesem Hintergrund liegt der Erfindung die Aufgabe zugrunde, in einem automatisiert ablaufenden Verfahren eine flexible Elastomermischungsplatte zu einem Elastomermischungsschlauch umzuformen, indem die Ränder der Elastomermischungsplatte in einem Stoßbereich mit konstanter Dicke verbunden werden.

Gelöst wird diese Aufgabe durch ein Verfahren zum automatischen Herstellen eines Elastomermischungsschlauchs, insbesondere eines Elastomermischungsschlauchs zum Herstellen von Zahnriemen oder Keilrippenriemen, mit den folgenden Schritten:
a) Konfektionieren einer Elastomermischungsplatte mit unter einem Winkel komplementär angeschrägten, einander gegenüberliegenden Seitenflächen;
b) Positionieren der konfektionierten Elastomermischungsplatte mit ihren die komplementär angeschrägten Seitenflächen aufweisenden Rändern auf zwei waagerecht angeordnete, bewegliche Greifvorrichtungen;
c) Fixieren der Ränder mit den komplementär angeschrägten Seitenflächen der Elastomermischungsplatte an den Greifvorrichtungen;
d) Positionieren der an den Greifvorrichtungen fixierten Elastomermischungsplatte unterhalb eines Tisches, über welchem beabstandet ein Pressbalken angeordnet ist;
e) Gleichzeitiges oder aufeinanderfolgendes Umschwenken der Greifvorrichtungen mit den daran fixierten Rändern mit den komplementär angeschrägten Seitenflächen der Elastomermischungsplatte um etwa 180°, derart dass die genannten beiden Ränder der Elastomermischungsplatte oberhalb des Tisches zueinander weisend aufliegen;
f) Verschieben wenigstens eines Randes der Ränder mit den komplementär angeschrägten Seitenflächen der Elastomermischungsplatte derart, dass die beiden komplementär angeschrägten Seitenflächen Stoß an Stoß übereinander liegend aneinander stoßen;
g) Verbinden der beiden komplementär angeschrägten Seitenflächen durch Andrücken des Pressbalkens auf die Oberseite der zusammengefügten Ränder der Elastomermischungsplatte;
h) Entfernen des Pressbalkens und der Greifvorrichtungen sowie Entnehmen des geformten Elastomermischungsschlauchs von dem Tisch.

Durch das beschriebene Verfahren wird das Konfektionieren der Elastomermischungsplatte zum Elastomermischungsschlauch durch eine Stoßfügung automatisiert, wodurch eine konstante Dicke des Elastomermischungsschlauchs im Stoßbereich sichergestellt wird. Der manuelle Arbeitsaufwand durch die Bedienungsperson wird erheblich vermindert, wodurch diese entlastet sowie die maximal erzeugbare Stückzahl pro Stunde stark erhöht wird. Ebenso sinkt der Ausschuss der Elastomermischungsschläuche hinsichtlich der Volumengleichheit im Stoßbereich und der Umfangslänge des Elastomermischungsschlauchs in gleichem Maße.

Das Verbinden der beiden komplementär angeschrägten Seitenflächen kann durch Verpressen mittels des genannten Pressbalkens erfolgen. Dabei kann vorgesehen sein, dass das Verpressen mittels eines heißen Pressbalkens erfolgt.

Das Fixieren der beiden Ränder mit den komplementär angeschrägten Seitenflächen an den Greifvorrichtungen kann mittels Unterdruck, mittels mechanischer Greifer oder mittels mechanischer Nadeln erfolgen.

Die gegenüberliegenden schrägen Seitenflächen der Elastomermischungsplatte können unter einem Winkel von jeweils einschließlich 30° bis etwa 45° komplementär angeschnitten oder entsprechend schräg geformt worden sein.

Das Konfektionieren der Elastomermischungsplatte kann gemäß einer Ausführungsform des erfindungsgemäßen Verfahrens durch automatisches Zuschneiden der Plattengröße, durch automatisches Durchführen des Schräganschnitts an den gegenüberliegenden Rändern, durch automatisches Dickenerkennen, und durch automatisches Erkennen des Abstandes der gegenüberliegenden, komplementär angeschrägten Seitenflächen der Elastomermischungsplatte erfolgen.

Die eingangs erwähnte Aufgabe wird des Weiteren gelöst durch eine Anlage zum Durchführen des vorstehend definierten Verfahrens. Diese Anlage umfasst:
- eine Einrichtung zum Konfektionieren einer Elastomermischungsplatte mit Vorrichtungen zum Zuschneiden der Elastomermischungsplatte auf ein vorgegebenes Maß aus einem Elastomermischungsplattenrohling und zum Schneiden oder Formen von schrägen Seitenflächen an einander gegenüberliegenden Rändern der Elastomermischungsplatte;
- eine Einrichtung zum Herstellen eines Elastomermischungsschlauchs aus der konfektionierten Elastomermischungsplatte, aufweisend bewegliche Greifvorrichtungen zum Halten der Ränder der Elastomermischungsplatte im Bereich der schrägen Seitenflächen,
zum Positionieren der Elastomermischungsplatte unterhalb eines Tisches, über welchem beabstandet ein Pressbalken angeordnet ist,
zum Umbiegen der Ränder der Elastomermischungsplatte um etwa 180°, derart dass die beiden Ränder der Elastomermischungsplatte im Bereich der schrägen Seitenflächen einander gegenüberliegend auf dem Tisch aufliegen,
zum Verschieben wenigstens eines ersten Randes der beiden Ränder der Elastomermischungsplatte in Richtung zum gegenüberliegenden zweiten Rand derart, dass die beiden komplementären, schrägen Seitenflächen Stoß an Stoß übereinander liegend aneinander stoßen,
und bei dem der Pressbalken zum Verbinden der beiden komplementär angeschrägten Seitenflächen Stoß an Stoß auf die Oberseite der beiden Ränder drückbar ist.

Der Pressbalken ist bevorzugt beheizbar ausgebildet, um eine schnelle Verklebung der angeschrägten Enden der Elastomermischungsplatte zu erreichen.

Die Vorrichtung zum Zuschneiden der Elastomermischungsplatte kann Sensoren zum Erkennen der Dicke der Elastomermischungsplatte, der Breite der Elastomermischungsplatte, und zur Ermittlung des Abstandes der beiden gegenüberliegenden, komplementär angeschrägten Seitenflächen aufweisen.

Zur Fertigstellung eines Zahnriemens oder eines Keilrippenriemens kann die beschriebene Anlage eine Einrichtung zum Konfektionieren von Zahnriemen oder Keilrippenriemen umfassen, in welcher diese Riemen scheibenweise von dem Elastomermischungsschlauch abgeschnitten werden, so dass sämtliche Fertigungsschritte, ausgehend von einem Elastomermischungsplattenrohling bis zum Fertigstellen von Zahnriemen oder Keilrippenriemen automatisiert gemäß dem vorgestellten Verfahren herstellbar sind.

Die Erfindung wird nachstehend anhand eines in der beigefügten Zeichnung dargestellten Ausführungsbeispiels näher erläutert. In der Zeichnung zeigt
Fig. 1 eine schematische Ansicht einer erfindungsgemäßen Anlage zum Herstellen von Zahnriemen oder Keilrippenriemen, und die
Figuren 2 bis 6 schematische Darstellungen der Fertigungsschritte zum Herstellen eines Elastomermischungsschlauchs mit dem erfindungsgemäßen Verfahren mittels einer Einrichtung zum Herstellen des Elastomermischungsschlauchs.

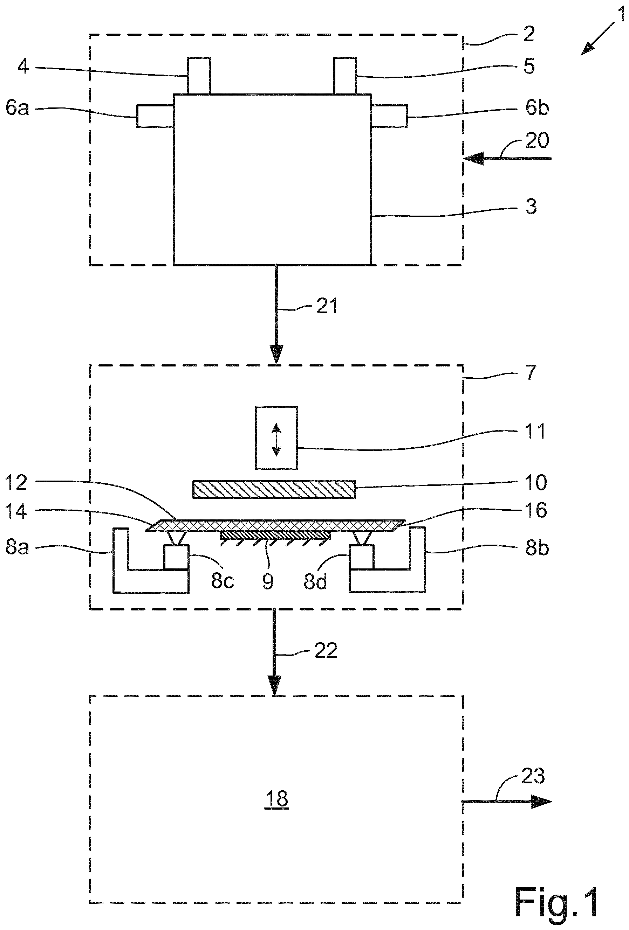

Die in Fig. 1 dargestellte Anlage 1 zum Herstellen von Zahnriemen oder Keilrippenriemen weist eine Einrichtung 2 zum Konfektionieren einer Elastomermischungsplatte 12 auf. Dieser Einrichtung 2 wird ein Elastomermischungsplattenrohling zugeführt, welches durch einen auf die Einrichtung 2 weisenden Pfeil 20 dargestellt ist. Die Einrichtung 2 verfügt über eine Vorrichtung 3 zum Zuschneiden des Elastomermischungsplattenrohlings sowie zum schrägen Anschneiden oder schrägen Umformen eines ersten Randes 13 sowie eines zweiten Randes 15 des Elastomermischungsplattenrohlings unter einem Winkel von jeweils etwa 30°, so dass eine Elastomermischungsplatte 12 entsteht, an deren beiden gegenüberliegenden Rändern 13, 15 jeweils eine schräge Seitenfläche 14, 16 ausgebildet ist, welche geometrisch komplementär zueinander ausgebildet sind.

An der Vorrichtung 3 zum Zuschneiden und Anschrägen einer Elastomermischungsplatte 12 sind bei dem hier gezeigten Ausführungsbeispiel vier Sensoren angeordnet, von denen ein erster Sensor 4 zum Erkennen der Dicke der Elastomermischungsplatte 12, ein zweiter Sensor 5 zum Erkennen der Breite der Elastomermischungsplatte 12, sowie ein dritter und ein vierter Abstandssensor 6a, 6b zum Erkennen des jeweiligen Ortes der Ränder 13, 15 der Elastomermischungsplatte 12 angeordnet sind. Mittel Hilfe dieser vier Sensoren 4, 5, 6a, 6b kann eine Elastomermischungsplatte 12 mit schrägen Seitenflächen 14, 16 präzise entsprechend vorgebbarer Maße automatisch konfektioniert werden.

Von der Einrichtung 2 zum Konfektionieren einer Elastomermischungsplatte 12 gelangt diese in eine Einrichtung 7 zum Herstellen eines Elastomermischungsschlauchs 17, welches durch einen die beiden Einrichtungen 2 und 7 verbindenden Pfeil 21 dargestellt ist. Die Einrichtung 7 zum Herstellen eines Elastomermischungsschlauchs 17 weist ein Paar beweglicher Greifvorrichtungen 8a, 8b auf, die im Bereich des ersten Randes 13 und des gegenüberliegenden zweiten Randes 15 einer auf einer planen Stützvorrichtung 9 horizontal aufliegenden Elastomermischungsplatte 12 angeordnet sind. Die beiden Ränder 13, 15 der Elastomermischungsplatte 12 ragen dabei soweit über die Stützvorrichtung 9 hinaus, dass diese Ränder 13, 15 von den beiden Greifvorrichtungen 8a, 8b getragen werden können. Oberhalb der Elastomermischungsplatte 12 befindet sich ein Tisch 10 und darüber, beabstandet vom Tisch 10, ein vertikal verstellbarer Pressbalken 11.

In dem hier gezeigten Ausführungsbeispiel verfügen die beiden Greifvorrichtungen 8a, 8b über jeweils eine mit Unterdruck arbeitende Saugeinrichtung 8c, 8d, welche die Elastomermischungsplatte 12 mittels Unterdruck an den Greifvorrichtungen 8a, 8b festhalten.

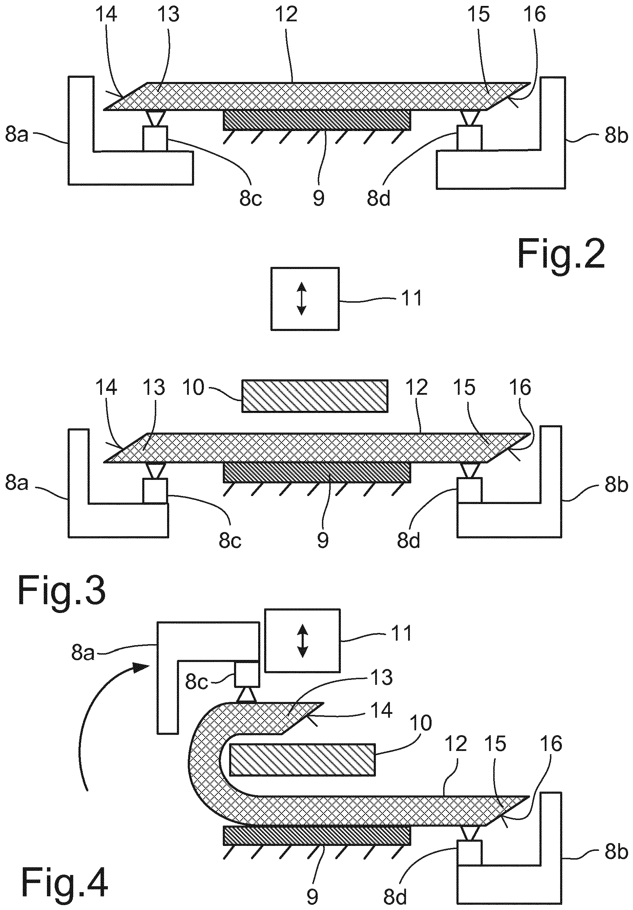

Das Zusammenfügen der komplementär angeschrägten Seitenflächen 14, 16 der Ränder 13, 15 der Elastomermischungsplatte 12 zu einem fertigen Elastomermischungsschlauch 17 erfolgt in der Einrichtung 7 entsprechend dem in den Figuren 2 bis 6 dargestellten Ablauf. Danach gelangt der an den beiden schrägen Seitenflächen 14, 16 zusammengefügte Elastomermischungsschlauch 17 zu einer Einrichtung 18 zum Konfektionieren von fertigen Zahnriemen oder Keilrippenriemen, welches durch einen die beiden Einrichtungen 7 und 18 verbindenden Pfeil 22 dargestellt ist. Das Weiterbearbeiten des Elastomermischungsschlauchs 17 zu fertigen Zahnriemen oder Keilrippenriemen erfolgt in bekannter Weise beispielsweise derartig, dass der Elastomermischungsschlauch 17 in der Einrichtung 18 auf ein bereits mit einem technischen Textil und Festigkeitsträgern belegtes Innenwerkzeug gestülpt wird. Auf den Elastomermischungsschlauch 17 wird dann ein Vlies und ein Außenwerkzeug aufgelegt. Dieser Aufbau wird abschließend in einem Autoklaven geformt und vulkanisiert. Nach dem Vulkanisieren wird der so erzeugte Wickel aus den beiden genannten Werkzeugen entformt und dieser abschließend durch Abschneiden ringförmiger Abschnitte in Zahnriemen oder Keilrippenriemen vereinzelt.

Unter Bezugnahme auf die Figuren 2 bis 6 ist ersichtlich, dass eine in der Einrichtung 2 konfektionierte Elastomermischungsplatte 12 in der Einrichtung 7 zum Herstellen eines Elastomermischungsschlauchs 17 auf das Paar der beweglichen Greifvorrichtungen 8a, 8b beziehungsweise auf deren Saugeinrichtungen 8c, 8d gelegt und dabei von der planen Stützvorrichtung 9 unterstützt wird. Der erste Rand 13 der Elastomermischungsplatte 12 wird an der ersten beweglichen Greifvorrichtung 8a mittels Unterdruck, mittels mechanischer Greifer oder mittels Nadelgreifer fixiert. Ebenso wird der gegenüberliegende zweite Rand 15 der Elastomermischungsplatte 12 mittels der zweiten beweglichen Greifvorrichtung 8b ebenfalls durch Unterdruck, mittels mechanischer Greifer oder mittels mechanischer Nadelgreifer fixiert, wonach die Elastomermischungsplatte 12 gemäß Fig. 3 mittels der beiden beweglichen Greifvorrichtungen 8a, 8b nach unterhalb des Tisches 10 verfahren wird.

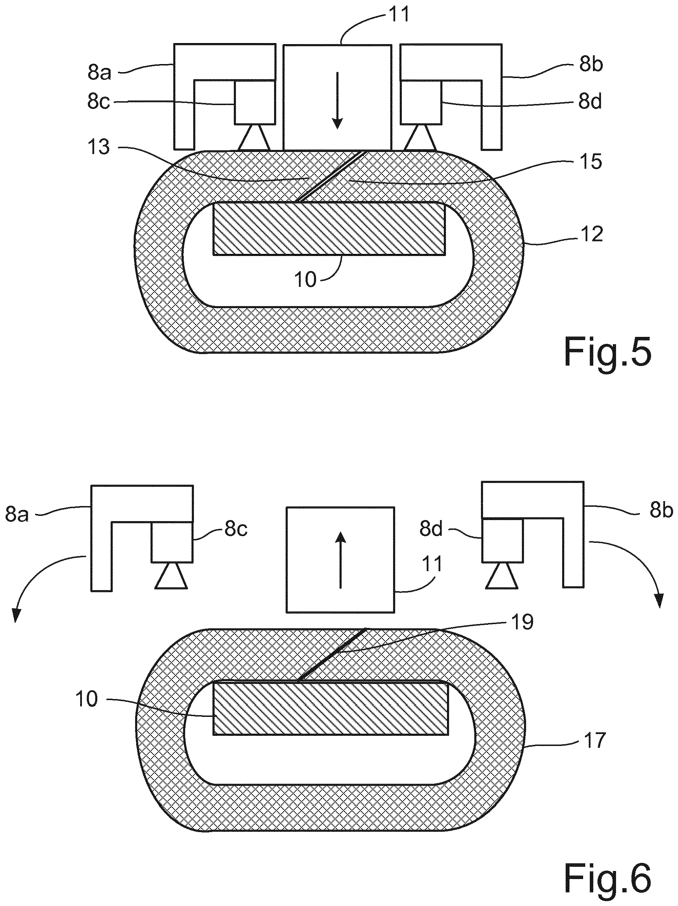

In dieser Stellung wird der erste Rand 13 der Elastomermischungsplatte 12 anschließend mittels der ersten Greifvorrichtung 8a um etwa 180° umgebogen und kommt dann wie Fig. 4 zeigt auf dem Tisch 10 unterhalb des Pressbalkens 11 zu liegen. Gemäß Fig. 5 wird danach der gegenüberliegende zweite Rand 15 der Elastomermischungsplatte 12 durch die zweite bewegliche Greifvorrichtung 8b ebenfalls um etwa 180° umgebogen und kommt dabei ebenso auf dem Tisch 10 in der dargestellten Weise zu liegen. Dabei weisen die komplementär angeschrägten Seitenflächen 14, 16 der Ränder 13, 15 der Elastomermischungsplatte 12 zunächst einen Abstand auf, der durch Zusammenschieben der beiden komplementär schrägen Seitenflächen 14, 16 Stoß an Stoß unterhalb des Pressbalkens 11 beseitigt wird. In dieser Stellung wird der Pressbalken 11 im Bereich der Stoß- und Fügestelle 19 von oben gegen die Elastomermischungsplatte 12 gepresst, um die beiden Ränder 13, 15 der Elastomermischungsplatte 12 an den beiden Seiteflächen 14, 16 fest miteinander zu verbinden. Das Zusammenpressen der Ränder 13, 15 mittels des Pressbalkens 11 erfolgt derartig, dass einerseits eine feste Verbindung der komplementär angeschrägten Seitenflächen 14, 16 erreicht wird, und andererseits die Fügestelle 19 die gleiche Dicke wie das übrige Material der Elastomermischungsplatte 12 aufweist.

Den Abtransport von Zahnriemen oder Keilrippenriemen, die in der Konfektionierungseinrichtung 18 von dem Elastomermischungsschlauch 17 abgeschnitten wurden, verdeutlicht der Pfeil 23 in Fig. 1.

Es ist ersichtlich, dass sich mit dem beschriebenen Verfahren mittels der erfindungsgemäßen Anlage 1 Elastomermischungsschläuche 17 mit beliebig vorgebbaren Umfangslängen herstellen lassen, ohne dass dafür Änderungen am Werkzeug beziehungsweise jeweils unterschiedliche Werkzeuge erforderlich sind. Durch den vollständig automatisierbaren Durchlauf durch die Anlage 1 lässt sich die pro Stunde erzeugbare Menge an Zahnriemen oder Keilrippenriemen erheblich vergrößern, wobei zugleich der Ausschuss reduziert ist.

### Bezugszeichenliste

- 1: Anlage zum Herstellen von Zahnriemen oder Keilrippenriemen
- 2: Einrichtung zum Konfektionieren einer Elastomermischungsplatte
- 3: Vorrichtung zum Zuschneiden und Anschrägen einer Elastomermischungsplatte
- 4: Erster Sensor, zum Erkennen der Dicke der Elastomermischungsplatte
- 5: Zweiter Sensor, zum Erkennen der Breite der Elastomermischungsplatte
- 6a: Dritter Sensor, zum Erkennen des Ortes des ersten Randes 13
- 6b: Vierter Sensor, zum Erkennen des Ortes des zweiten Randes 15
- 7: Einrichtung zum Herstellen eines Elastomermischungsschlauchs
- 8a, 8b: Greifvorrichtungen
- 8c, 8d: Saugeinrichtungen der Greifvorrichtungen
- 9: Stützvorrichtung, Stützfläche
- 10: Tisch
- 11: Pressbalken
- 12: Elastomermischungsplatte
- 13: Erster Rand der Elastomermischungsplatte
- 14: Schräg Seitenfläche des ersten Randes 13
- 15: Gegenüberliegender zweiter Rand der Elastomermischungsplatte
- 16: Schräge Seitenfläche des zweiten Randes 15
- 17: Elastomermischungsschlauch
- 18: Einrichtung zum Konfektionieren von Zahnriemen oder Keilrippenriemen
- 19: Fügestelle
- 20: Pfeil, Zuführung eines Elastomermischungsplattenrohlings
- 21: Pfeil, Zuführung einer Elastomermischungsplatte zur Einrichtung 7
- 22: Pfeil, Zuführung eines Elastomermischungsschlauch zur Einrichtung 18
- 23: Pfeil, Abtransport von Zahnriemen oder Keilrippenriemen

## Patentansprüche

1. Verfahren zum automatischen Herstellen eines Elastomermischungsschlauchs (17), insbesondere eines Elastomermischungsschlauchs (17) zum Herstellen von Zahnriemen oder Keilrippenriemen, mit den folgenden Schritten:
a) Konfektionieren einer Elastomermischungsplatte (12) mit unter einem Winkel komplementär angeschrägten , einander gegenüberliegenden Seitenflächen (14, 16);
b) Positionieren der konfektionierten Elastomermischungsplatte (12) mit ihren die komplementär angeschrägten Seitenflächen (14, 16) aufweisenden Rändern (13, 15) auf zwei waagerecht angeordnete, bewegliche Greifvorrichtungen (8a, 8b);
c) Fixieren der Ränder (13, 15) mit den komplementär angeschrägten Seitenflächen (14, 16) der Elastomermischungsplatte (12) an den Greifvorrichtungen (8a, 8b);
d) Positionieren der an den Greifvorrichtungen (8a, 8b) fixierten Elastomermischungsplatte (12) unterhalb eines Tisches (10), über welchem beabstandet ein Pressbalken (11) angeordnet ist;
e) Gleichzeitiges oder aufeinanderfolgendes Umschwenken der Greifvorrichtungen (8a, 8b) mit den daran fixierten Rändern (13, 15) mit den komplementär angeschrägten Seitenflächen (14, 16) der Elastomermischungsplatte (12) um 180°, derart dass die genannten beiden Ränder (13, 15) der Elastomermischungsplatte (12) oberhalb des Tisches (10) zueinander weisend aufliegen;
f) Verschieben wenigstens eines Randes der Ränder (13, 15) mit den komplementär angeschrägten Seitenflächen (14, 16) der Elastomermischungsplatte (12) derart, dass die beiden komplementär angeschrägten Seitenflächen (14, 16) Stoß an Stoß übereinander liegend aneinander stoßen;
g) Verbinden der beiden komplementär angeschrägten Seitenflächen (14, 16) durch Andrücken des Pressbalkens (11) auf die Oberseite der zusammengefügten Ränder (13, 15) der Elastomermischungsplatte (12);
h) Entfernen des Pressbalkens (11) und der Greifvorrichtungen (8a, 8b) sowie Entnehmen des geformten Elastomermischungsschlauchs (17) von dem Tisch (10).

2. Verfahren nach Anspruch 1, **dadurch gekennzeichnet, dass** das Verpressen mittels eines heißen Pressbalkens (11) erfolgt.

3. Verfahren nach einem der Ansprüche 1 oder 2, **dadurch gekennzeichnet, dass** das Fixieren der beiden Ränder (13 ,15) mit den komplementär angeschrägten Seitenflächen (14, 16) an den Greifvorrichtungen (8a, 8b) mittels Unterdruck erfolgt.

4. Verfahren nach einem der Ansprüche 1 bis 3, **dadurch gekennzeichnet, dass** das Fixieren der beiden Ränder (13, 15) mit den komplementär angeschrägten Seitenflächen (14, 16) an den Greifvorrichtungen (8a, 8b) mittels mechanischer Greifer erfolgt.

5. Verfahren nach einem der Ansprüche 1 bis 4, **dadurch gekennzeichnet, dass** das Fixieren der beiden Ränder (13, 15) mit den komplementär angeschrägten Seitenflächen (14, 16) an den Greifvorrichtungen (8a, 8b) mittels mechanischer Nadeln erfolgt.

6. Verfahren nach einem der Ansprüche 1 bis 5, **dadurch gekennzeichnet, dass** die gegenüberliegenden Seitenflächen (14, 16) unter einem Winkel von jeweils einschließlich 30° bis 45° komplementär angeschnitten oder entsprechend schräg geformt werden.

7. Verfahren nach einem der Ansprüche 1 bis 6, **dadurch gekennzeichnet, dass** das Konfektionieren der Elastomermischungsplatte (12) durch automatisches Zuschneiden der Plattengröße, durch automatisches Durchführen des Schräganschnitts an den gegenüberliegenden Rändern (13, 15), durch automatisches Dickenerkennen, und durch automatisches Erkennen des Abstandes der gegenüberliegenden, komplementär angeschrägten Seitenflächen (14, 16) erfolgt.

8. Anlage (1) zum Durchführen des Verfahrens nach einem der Ansprüche 1 bis 7, **gekennzeichnet durch**:
- eine Einrichtung (2) zum Konfektionieren einer Elastomermischungsplatte (12) mit Vorrichtungen (3) zum Zuschneiden der Elastomermischungsplatte (12) auf ein vorgegebenes Maß aus einem Elastomermischungsplattenrohling und zum Schneiden oder Formen von schrägen Seitenflächen (14, 16) an einander gegenüberliegenden Rändern (13, 15) der Elastomermischungsplatte (12);
- eine Einrichtung (7) zum Herstellen eines Elastomermischungsschlauchs (17) aus der konfektionierten Elastomermischungsplatte (12), aufweisend bewegliche Greifvorrichtungen (8a, 8b) zum Halten der Ränder (13, 15) der Elastomermischungsplatte (12) im Bereich der schrägen Seitenflächen (14, 16),
zum Positionieren der Elastomermischungsplatte (12) unterhalb eines Tisches (10), über welchem beabstandet ein Pressbalken (11) angeordnet ist,
zum Umbiegen der Ränder (13, 15) der Elastomermischungsplatte (12) um 180°, derart dass die beiden Ränder (13, 15) der Elastomermischungsplatte (12) im Bereich der schrägen Seitenflächen (14, 16) einander gegenüberliegend auf dem Tisch (10) aufliegen,
zum Verschieben wenigstens eines ersten Randes (13) der beiden Ränder (13, 15) der Elastomermischungsplatte (12) in Richtung zum gegenüberliegenden zweiten Rand (15) derart, dass die beiden komplementären, schrägen Seitenflächen (14, 16) Stoß an Stoß übereinander liegend aneinander stoßen,
und bei dem der Pressbalken (11) zum Verbinden der beiden komplementär angeschrägten Seitenflächen (14, 16) Stoß an Stoß auf die Oberseite der beiden Ränder (13, 15) drückbar ist.

9. Anlage nach Anspruch 8, **dadurch gekennzeichnet, dass** der Pressbalken (11) beheizbar ausgebildet ist.

10. Anlage nach Anspruch 8 oder 9, **dadurch gekennzeichnet, dass** die Vorrichtung (2) zum Zuschneiden der Elastomermischungsplatte (12) Sensoren (4, 5, 6a, 6b) zum Erkennen der Dicke der Elastomermischungsplatte (12), der Breite der Elastomermischungsplatte (12), und des Abstandes der gegenüberliegenden, komplementär angeschrägten Seitenflächen (14, 16) aufweist.

11. Anlage nach einem der Ansprüche 8 bis 10, **dadurch gekennzeichnet, dass** sie eine Einrichtung (18) zum Konfektionieren von Zahnriemen oder Keilrippenriemen umfasst, in welcher die Zahnriemen oder Keilrippenriemen scheibenweise von einem Elastomermischungsschlauch (17) abtrennbar sind.

## Claims

1. Method for automatically producing an elastomer mixture tube (17), in particular an elastomer mixture tube (17) for producing toothed belts or V-ribbed belts, comprising the following steps:
a) making up an elastomer mixture sheet (12) having side faces (14, 16) that lie opposite one another and are complementarily bevelled at an angle;
b) positioning the made-up elastomer mixture sheet (12) with the edges (13, 15) thereof that have the complementarily bevelled side faces (14, 16) onto two horizontally arranged, movable gripping devices (8a, 8b);
c) fixing the edges (13, 15) with the complementarily bevelled side faces (14, 16) of the elastomer mixture sheet (12) on the gripping devices (8a, 8b);
d) positioning the elastomer mixture sheet (12) fixed on the gripping devices (8a, 8b) under a table (10), over which a pressing bar (11) is arranged at a distance;
e) simultaneously or successively swinging the gripping devices (8a, 8b), with the edges (13, 15) with the complementarily bevelled side faces (14, 16) of the elastomer mixture sheet (12) fixed thereon, through 180° in such a way that the said two edges (13, 15) of the elastomer mixture sheet (12) lie facing one another above the table (10);
f) displacing at least one edge of the edges (13, 15) with the complementarily bevelled side faces (14, 16) of the elastomer mixture sheet (12) in such a way that the two complementarily bevelled side faces (14, 16) butt against one another, lying flush one on top of the other;
g) connecting the two complementarily bevelled side faces (14, 16) by pressing the pressing bar (11) onto the upper side of the joined-together edges (13, 15) of the elastomer mixture sheet (12);
h) removing the pressing bar (11) and the gripping devices (8a, 8b) and removing the shaped elastomer mixture tube (17) from the table (10).

2. Method according to Claim 1, **characterized in that** the pressing is performed by means of a hot pressing bar (11).

3. Method according to either of Claims 1 and 2, **characterized in that** the fixing of the two edges (13, 15) with the complementarily bevelled side faces (14, 16) on the gripping devices (8a, 8b) is performed by means of negative pressure.

4. Method according to one of Claims 1 to 3, **characterized in that** the fixing of the two edges (13, 15) with the complementarily bevelled side faces (14, 16) on the gripping devices (8a, 8b) is performed by means of mechanical grippers.

5. Method according to one of Claims 1 to 4, **characterized in that** the fixing of the two edges (13, 15) with the complementarily bevelled side faces (14, 16) on the gripping devices (8a, 8b) is performed by means of mechanical pins.

6. Method according to one of Claims 1 to 5, **characterized in that** the side faces (14, 16) lying opposite one another are cut complementarily at an included angle of in each case 30° to 45° or are shaped correspondingly obliquely.

7. Method according to one of Claims 1 to 6, **characterized in that** the making up of the elastomer mixture sheet (12) is performed by automatically cutting the sheet to size, automatically carrying out the oblique cut on the edges (13, 15) lying opposite one another, automatically detecting the thickness, and automatically detecting the distance between the complementarily bevelled side faces (14, 16) lying opposite one another.

8. Apparatus (1) for carrying out the method according to one of Claims 1 to 7, **characterized by**:
- a unit (2) for making up an elastomer mixture sheet (12) with devices (3) for cutting the elastomer mixture sheet (12) to a prescribed size from an elastomer mixture sheet blank and for cutting or shaping oblique side faces (14, 16) on edges (13, 15) lying opposite one another of the elastomer mixture sheet (12);
- a unit (7) for producing an elastomer mixture tube (17) from the made-up elastomer mixture sheet (12), having movable gripping devices (8a, 8b) for holding the edges (13, 15) of the elastomer mixture sheet (12) in the region of the bevelled side faces (14, 16),
for positioning the elastomer mixture sheet (12) under a table (10), over which a pressing bar (11) is arranged at a distance,
for bending the edges (13, 15) of the elastomer mixture sheet (12) over by 180° in such a way that the two edges (13, 15) of the elastomer mixture sheet (12) in the region of the oblique side faces (14, 16) rest on the table (10), lying opposite one another,
for displacing at least a first edge (13) of the two edges (13, 15) of the elastomer mixture sheet (12) in the direction of the second edge (15) lying opposite in such a way that the two complimentary, oblique side faces (14, 16) butt against one another, lying flush one on top of the other,
and in which the pressing bar (11) can be pressed onto the upper side of the two edges (13, 15) for connecting the two complementarily bevelled side faces (14, 16) flush with one another.

9. Apparatus according to Claim 8, **characterized in that** the pressing bar (11) is of a heatable design.

10. Apparatus according to Claim 8 or 9, **characterized in that** the device (2) for cutting the elastomer mixture sheet (12) to size has sensors (4, 5, 6a, 6b) for detecting the thickness of the elastomer mixture sheet (12), the width of the elastomer mixture sheet (12), and the distance between the complementarily bevelled side faces (14, 16) lying opposite one another.

11. Apparatus according to one of Claims 8 to 10, **characterized in that** it comprises a unit (18) for making up toothed belts or V-ribbed belts, in which the toothed belts or V-ribbed belts can be cut off in slices from an elastomer mixture tube (17).

## Revendications

1. Procédé de fabrication automatique d'un tuyau en mélange d'élastomère (17), en particulier d'un tuyau en mélange d'élastomère (17) pour la fabrication de courroies dentées ou de courroies trapézoïdales crantées, comprenant les étapes suivantes :
a) fabrication d'une plaque en mélange d'élastomère (12) avec des faces latérales (14, 16) opposées l'une à l'autre, biseautées selon un angle complémentaire ;
b) positionnement de la plaque en mélange d'élastomère fabriquée (12) avec ses bords (13, 15) présentant les faces latérales (14, 16) biseautées de manière complémentaire sur deux dispositifs de préhension mobiles (8a, 8b) disposés horizontalement ;
c) fixation des bords (13, 15) avec les faces latérales (14, 16) biseautées de manière complémentaire de la plaque en mélange d'élastomère (12) aux dispositifs de préhension (8a, 8b) ;
d) positionnement de la plaque en mélange d'élastomère (12) fixée aux dispositifs de préhension (8a, 8b) en dessous d'une table (10) au-dessus et à distance de laquelle est disposée une poutre de pressage (11) ;
e) pivotement simultané ou successif de 180° des dispositifs de préhension (8a, 8b) avec les bords (13, 15) fixés à ceux-ci avec les faces latérales (14, 16) biseautées de manière complémentaire de la plaque en mélange d'élastomère (12), de telle sorte que lesdits deux bords (13, 15) de la plaque en mélange d'élastomère (12) s'appliquent de manière tournée l'un vers l'autre au-dessus de la table (10) ;
f) déplacement d'au moins un bord des bords (13, 15) avec les faces latérales (14, 16) biseautées de manière complémentaire de la plaque en mélange d'élastomère (12) de telle sorte que les deux faces latérales (14, 16) biseautées de manière complémentaire butent l'une contre l'autre bout à bout en s'appliquant l'une au-dessus de l'autre ;
g) connexion des deux faces latérales (14, 16) biseautées de manière correspondante par pressage de la poutre de pressage (11) sur le côté supérieur des bords assemblés (13, 15) de la plaque en mélange d'élastomère (12) ;
h) enlèvement de la poutre de pressage (11) et des dispositifs de préhension (8a, 8b) et enlèvement du tuyau en mélange d'élastomère (17) formé de la table (10).

2. Procédé selon la revendication 1, **caractérisé en ce que** le pressage s'effectue au moyen d'une poutre de pressage (11) chaude.

3. Procédé selon l'une quelconque des revendications 1 ou 2, **caractérisé en ce que** la fixation des deux bords (13, 15) avec les faces latérales (14, 16) biseautées de manière complémentaire aux dispositifs de préhension (8a, 8b) s'effectue au moyen d'une dépression.

4. Procédé selon l'une quelconque des revendications 1 à 3, **caractérisé en ce que** la fixation des deux bords (13, 15) avec les faces latérales (14, 16) biseautées de manière complémentaire au niveau des dispositifs de préhension (8a, 8b) s'effectue au moyen des dispositifs de préhension mécaniques.

5. Procédé selon l'une quelconque des revendications 1 à 4, **caractérisé en ce que** la fixation des deux bords (13, 15) avec les faces latérales (14, 16) biseautées de manière complémentaire au niveau des dispositifs de préhension (8a, 8b) s'effectue au moyen d'aiguilles mécaniques.

6. Procédé selon l'une quelconque des revendications 1 à 5, **caractérisé en ce que** les faces latérales (14, 16) opposées sont coupées de manière complémentaire suivant un angle respectif de 30° à 45° inclus ou sont formées obliquement de manière correspondante.

7. Procédé selon l'une quelconque des revendications 1 à 6, **caractérisé en ce que** la fabrication de la plaque en mélange d'élastomère (12) s'effectue par découpage automatique à la dimension de la plaque, par réalisation automatique du biseautage au niveau des bords (13, 15) opposés, par détection automatique de l'épaisseur, et par détection automatique de l'espacement entre les faces latérales (14, 16) opposées biseautées de manière complémentaire.

8. Installation (1) pour mettre en oeuvre le procédé selon l'une quelconque des revendications 1 à 7, **caractérisée par** :
- un dispositif (2) pour fabriquer une plaque en mélange d'élastomère (12) avec des dispositifs (3) pour découper la plaque en mélange d'élastomère (12) à des dimensions prédéfinies à partir d'une ébauche de plaque en mélange d'élastomère et pour découper ou former des faces latérales (14, 16) obliques au niveau de bords (13, 15) mutuellement opposés de la plaque en mélange d'élastomère (12) ;
- un dispositif (7) pour fabriquer un tuyau en mélange d'élastomère (17) à partir de la plaque en mélange d'élastomère (12) fabriquée, présentant des dispositifs de préhension déplaçables (8a, 8b) pour retenir les bords (13, 15) de la plaque en mélange d'élastomère (12) dans la région des faces latérales (14, 16) obliques,
pour positionner la plaque en mélange d'élastomère (12) en dessous d'une table (10) au-dessus et à distance de laquelle est disposée une poutre de pressage (11),
pour recourber de 180° les bords (13, 15) de la plaque en mélange d'élastomère (12) de telle sorte que les deux bords (13, 15) de la plaque en mélange d'élastomère (12) s'appliquent dans la région des faces latérales (14, 16) obliques en regard l'un de l'autre sur la table (10),
pour déplacer au moins un premier bord (13) des deux bords (13, 15) de la plaque en mélange d'élastomère (12) dans la direction du deuxième bord opposé (15) de telle sorte que les deux faces latérales (14, 16) obliques complémentaires butent l'une contre l'autre en s'appliquant bout-à-bout l'une au-dessus de l'autre,
et dans lequel la poutre de pressage (11) peut être pressée pour la connexion des deux faces latérales (14, 16) biseautées de manière complémentaire bout-à-bout sur le côté supérieur des deux bords (13, 15).

9. Installation selon la revendication 8, **caractérisée en ce que** la poutre de pressage (11) est réalisée de manière à pouvoir être chauffée.

10. Installation selon la revendication 8 ou 9, **caractérisée en ce que** le dispositif (2) pour découper la plaque en mélange d'élastomère (12) présente des capteurs (4, 5, 6a, 6b) pour détecter l'épaisseur de la plaque en mélange d'élastomère (12), la largeur de la plaque en mélange d'élastomère (12), et la distance entre les faces latérales (14, 16) opposées biseautées de manière complémentaire.

11. Installation selon l'une quelconque des revendications 8 à 10, **caractérisée en ce qu'**elle comprend un dispositif (18) pour fabriquer des courroies dentées ou des courroies trapézoïdales crantées, dans lequel les courroies dentées ou les courroies trapézoïdales crantées peuvent être découpées en rondelles à partir d'un tuyau en mélange d'élastomère (17).
